# FASCICULE DE BREVET EUROPEEN

(11) **EP 3 153 019 B1**
(45) Date de publication et mention de la délivrance du brevet: **26.09.2018**
(21) Numéro de dépôt: 15306585.9
(22) Date de dépôt: 08.10.2015
(51) Int. Cl.: A01M 3/02

(54) **DISPOSITIF DE CAPTURE D'INSECTES**
VORRICHTUNG ZUM EINFANGEN VON INSEKTEN
DEVICE FOR CATCHING INSECTS

(43) Date de publication de la demande: 12.04.2017
(73) Titulaire: OMS Investments, Inc., Los Angeles, CA 90067 (US)
(72) Inventeur: CHAZALET, Lionel, 69650 Saint Germain au Mont d'Or (FR); LEROUX, Bruno, 69460 Saint Étienne des Oullières (FR); DROUOT, Noémie, 69600 Oullins (FR)
(74) Mandataire: Cabinet Laurent & Charras

(56) Documents cités:
- US-A- 2 618 882
- US-A- 4 653 222
- US-A- 6 055 767
- US-A1- 2009 158 636
- US-B1- 7 430 830

## Description

### DOMAINE DE L'INVENTION

La présente invention concerne un dispositif de capture d'insectes destiné à capturer un insecte sans l'écraser, de sorte à préserver l'intégrité du support sur lequel l'insecte évolue. Elle vise également un tel dispositif, susceptible d'être mis en oeuvre pour la capture d'insectes évoluant sur un plafond.

### ETAT ANTERIEUR DE LA TECHNIQUE

Il est connu de capturer des insectes à l'aide de tapettes à mouche et de bandelettes collantes. Cependant, les tapettes à mouche présentent l'inconvénient de laisser des traces, notamment de sang sur la surface de frappe d'un insecte. En outre, les bandes collantes sont disgracieuses, due à leurs expositions prolongées dans la pièce à désinsectiser.

L'invention vise à capturer des insectes sans les écraser et au moyen d'un dispositif manuel.

A cet effet, le document US 2 618 882 décrit un dispositif de capture d'insectes comportant un manche et une tête disposée à l'une des extrémités du manche. La tête présente une cavité à l'intérieur de laquelle une feuille cartonnée est disposée. La feuille cartonnée présente une surface collante de sorte que, lorsque la cavité est disposée sur un insecte, l'insecte demeure collé sur la feuille cartonnée et ne peut plus s'en dégager.

Ainsi, l'insecte n'est pas écrasé contre le support sur lequel il évolue, mais il est capturé par la surface collante disposée à l'intérieur de la cavité. Cependant, la surface cartonnée doit être changée dès que plusieurs insectes sont collés dessus. Or, le système de montage et de démontage de la surface cartonnée est un processus relativement complexe, qui fait perdre du temps à l'utilisateur.

En outre, le US 7 430 830 décrit une tapette à mouche comportant un manche et une tête disposée à l'une des extrémités du manche. La tête présente un bloc de feuilles adhésives destinées à capturer les débris des insectes éliminés lorsque la tapette percute un insecte volant.

Ainsi, le corps des insectes morts, suite à l'utilisation de la tapette à mouche, est stocké sur la feuille adhésive. La feuille adhésive peut ensuite simplement être décollée du bloc de feuilles adhésives pour être jetée.

Ainsi, cette tapette à mouche permet de changer rapidement la surface collante. Cependant, les feuilles collantes du bloc de feuilles collantes sont superposées les unes sur les autres. Ainsi, lors de l'effeuillage d'une feuille collante, il existe un risque de retrait de plusieurs feuilles collantes simultanément. Il s'ensuit que la consommation des feuilles collantes est augmentée par le risque de retrait de plusieurs feuilles collantes simultanément.

En outre, cette tapette à mouche ne permet pas de capturer un insecte sans l'écraser. Il s'ensuit que si l'insecte évolue sur une surface, la surface sur laquelle évolue l'insecte est souillée par l'écrasement de l'insecte.

Le document US 2009/158636 décrit également un tel dispositif, qui comprend en outre un cadre définissant avec un support une cavité débouchant sur face collante du bloc de feuillets collantes.

Le problème technique que se propose de résoudre l'invention est donc de capturer un insecte sans l'écraser tout en permettant de changer facilement la surface de capture.

Un autre problème technique qu'entend solutionner la présente invention réside dans la possibilité de procéder à la capture d'insectes évoluant sur un plafond.

### EXPOSE DE L'INVENTION

La présente invention vise à résoudre ce problème technique à l'aide d'un cadre coopérant avec un support sur lequel un bloc de feuilles collantes est disposé. Le cadre forme ainsi une cavité, destinée à capturer un insecte et retenant également une partie des feuilles collantes du bloc de feuilles collantes.

A cet effet, l'invention concerne un dispositif de capture d'insectes selon la revendication 1.

L'invention permet ainsi de capturer les insectes sans les écraser en utilisant le cadre pour buter contre la surface sur laquelle l'insecte évolue. L'insecte est donc piégé dans la cavité formée par le cadre et se colle sur la surface collante.

Lorsque la surface collante est recouverte de plusieurs insectes, le changement de la surface collante est effectué par un simple effeuillage du bloc de feuilles collantes. Lors de cette étape d'effeuillage, une partie des feuilles du bloc de feuilles collantes est maintenue par le cadre et une autre partie des feuilles, et notamment la feuille collante supérieure est extraite du bloc de feuilles collantes. La séparation de chaque feuille collante intervient au niveau d'une zone de rupture prédéterminée par la position du cadre.

Selon un mode de réalisation, le cadre est monté en rotation sur le support, le cadre comportant un fermoir muni d'une languette destinée à coopérer avec une gorge du support de sorte à maintenir le cadre sur le support. Lorsque le bloc de feuilles collantes ne contient plus de feuilles collantes, il peut être remplacé en ouvrant le fermoir du cadre et en déplaçant le cadre en rotation par rapport au support de sorte à extraire le bloc usagé. Un nouveau bloc de feuilles collantes peut ensuite être disposé sur le support. Le cadre est alors refermé au-dessus de ce nouveau bloc de feuilles collantes.

Selon un mode de réalisation, le support comporte au moins un ergot, et avantageusement au moins quatre ergots, s'étendant perpendiculairement à la surface du support et positionné de sorte à être recouvert par le rebord lorsque le cadre est fixé sur le support. Ce mode de réalisation permet de maintenir en position le bloc de feuilles collantes lors du positionnement du bloc de feuilles collantes.

Selon un mode de réalisation, le support comporte des moyens de détrompage du bloc de feuilles collantes réalisés par la position et/ou la forme des ergots. Ce mode de réalisation permet de réaliser un détrompage mécanique pour assurer que le bloc de feuilles collantes soit correctement positionné dans le support, et notamment que la face collante soit disposée en regard de la cavité.

Selon un mode de réalisation, le support est de forme concave, convexe, circulaire et/ou parallélépipédique. Le support permet de maintenir la face arrière du bloc de feuilles collantes.

Selon un mode de réalisation, un montant du support et/ou du cadre présente un évidement destiné à permettre à une languette des feuilles du bloc de feuilles collantes de s'étendre en dehors de la cavité. Ce mode de réalisation permet d'effeuiller facilement une feuille du bloc de feuilles collantes à l'aide d'une languette dépourvue de surface collante prévue à cet effet.

Selon un mode de réalisation, la tête est montée en rotation à une extrémité du manche, la tête étant mobile entre deux positions :
- une position verticale dans laquelle un ergot de la tête assure un blocage de la tête sur le manche, et
- une position horizontale dans laquelle un ergot du manche assure un blocage de la tête sur le manche. Ce mode de réalisation permet d'une part de capturer des insectes au plafond et d'autre part de capturer des insectes sur des murs.

Selon un mode de réalisation, la tête comporte une face, opposée à la cavité, présentant au moins une surface rigide apte à percuter un insecte volant de sorte à le détruire. Ce mode de réalisation permet d'utiliser le dispositif comme une tapette à mouche classique.

Selon un mode de réalisation, le manche comporte une partie supérieure et une partie inférieure reliées par une liaison pivot, des moyens de blocage permettent de maintenir les parties supérieures et inférieures alignées. Ce mode de réalisation permet de replier le dispositif lorsqu'il n'est pas utilisé.

### DESCRIPTION DES FIGURES

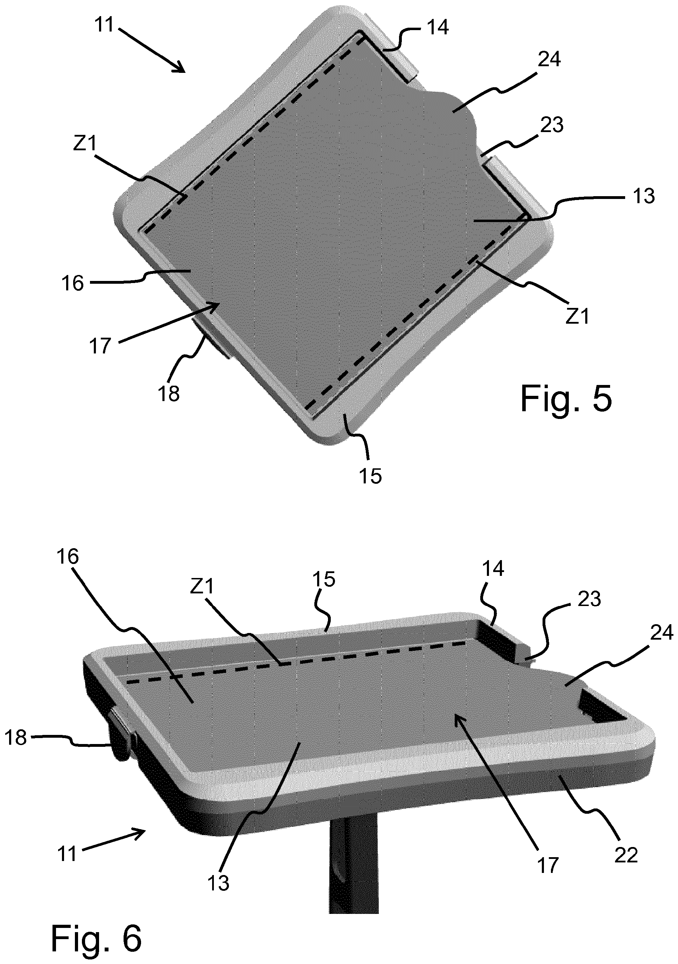

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 6 représentent :
- figure 1 : une vue en perspective d'un dispositif de capture d'insectes selon un mode de réalisation de l'invention avec une tête en position horizontale et un manche déplié ;
- figure 2 : une vue en perspective du dispositif de la figure 1 avec une tête en position verticale et un manche replié ;
- figure 3 : une vue en perspective du dispositif de la figure 2 sans le cadre et sans la partie inférieure du manche ;
- figure 4 : une vue en perspective plongeante du dispositif de la figure 1 muni d'un bloc de feuilles collantes ;
- figure 5 : une vue en perspective de dessus du dispositif de la figure 1 muni d'un bloc de feuilles collantes ; et
- figure 6 : une vue en perspective de côté de la tête du dispositif de la figure 1 muni d'un bloc de feuilles collantes.

### EXEMPLES DE REALISATION DE L'INVENTION

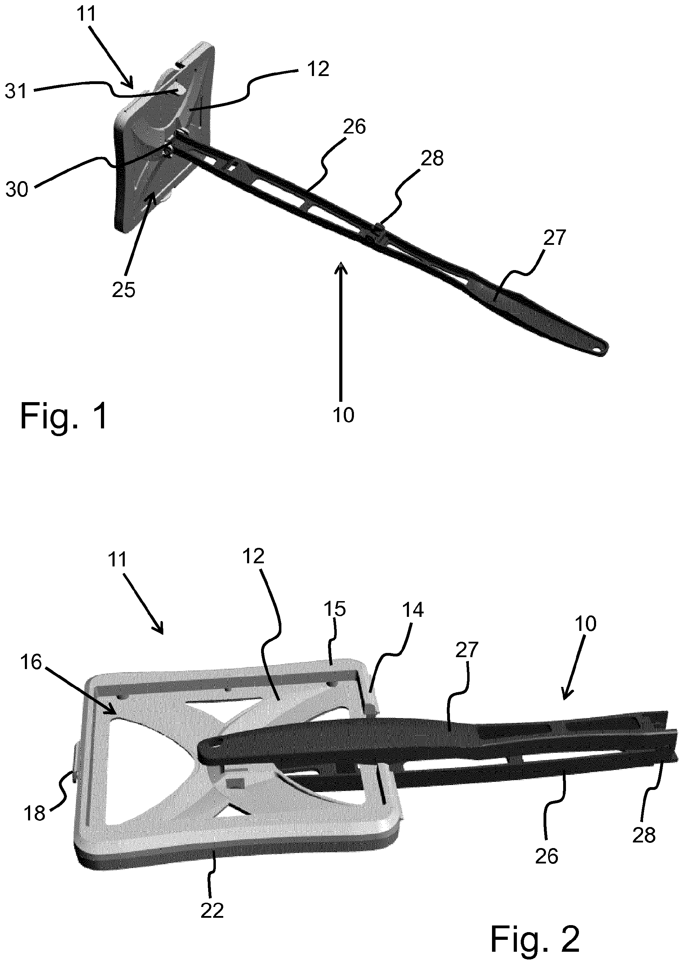

La figure 1 illustre un dispositif de capture d'insectes comportant un manche **10** et une tête **11** disposée à une extrémité supérieure du manche **10.** La tête **11** est destinée à supporter un bloc de feuilles collantes **17**, dont chaque feuille présente une surface collante de sorte à retenir un insecte.

Le manche **10** comporte une partie inférieure **27** et une partie supérieure **26** reliées par une liaison pivot **28.** La partie inférieure **27** présente une forme ergonomique permettant à un utilisateur d'appréhender le dispositif. Les deux parties **26, 27** présentent une section en forme de U, avec un bord dont l'épaisseur est comprise entre 1 et 5 millimètres. La matière du manche **10** est préférentiellement réalisée en plastique, par exemple en poplypropylène injecté, de sorte que le dispositif soit léger et résistant mécaniquement. En outre, des évidements sont disposés dans la longueur du manche **10** pour réduire le poids du manche **10,** et corollairement assurer un bon compromis souplesse / rigidité.

Le manche **10** peut adopter deux positions :
▪ une position dépliée (figure 1) dans laquelle la longueur de la partie inférieure **27** est alignée avec la longueur de la partie supérieure **26** ; et
▪ une position repliée (figure 2) dans laquelle la partie inférieure **27** s'étend le long de la partie supérieure **26.**

En variante, le manche **10** peut être réalisé en une seule pièce et avec d'autres matériaux sans sortir de l'esprit de la présente invention. En outre, le manche **10** peut être démontable par parties.

L'extrémité supérieure de la partie supérieure **26** présente une liaison pivot reliée à la tête **11.** Plus précisément, la tête **11** comporte un support **12** relié à la partie supérieure **26** du manche **11,** et une cadre **14** monté sur le support **12.** La tête **11** peut être maintenue dans deux positions : une position verticale (figure 1) et une position horizontale (figure 2).

Dans la position verticale, le support **12** de la tête **11** s'étend perpendiculairement à la partie supérieure **26** du manche **10.** Cette position est maintenue par un ergot **30** du manche **10** s'étendant perpendiculairement par rapport à la partie supérieure **26** du manche **10.** Cet ergot **30** est destiné à coopérer avec un bourrelet du support **12** au niveau de la liaison pivot entre le support **12** et le manche **10.**

Dans la position horizontale, le support **12** de la tête **11** s'étend parallèlement à la partie supérieure **26** du manche **10.** Cette position est maintenue par un ergot **31** disposé sur une face arrière **25** de la tête **11**, l'ergot **31** s'étendant perpendiculairement au support **12.** Cet ergot **31** est destiné à coopérer avec une lumière ménagée dans la partie supérieure **26** du manche **10.**

La figure 1 illustre également le fait, que selon un mode de réalisation, le support **12** comporte une surface rigide réalisée par deux demi-cercles entrecroisés. Cette surface rigide permet à la fois de percuter des insectes volants à la manière d'une tapette à mouche classique, et également de supporter un bloc de feuilles collantes **13.** En variante, le support peut présenter une forme concave, convexe, circulaire et/ou parallélépipédique.

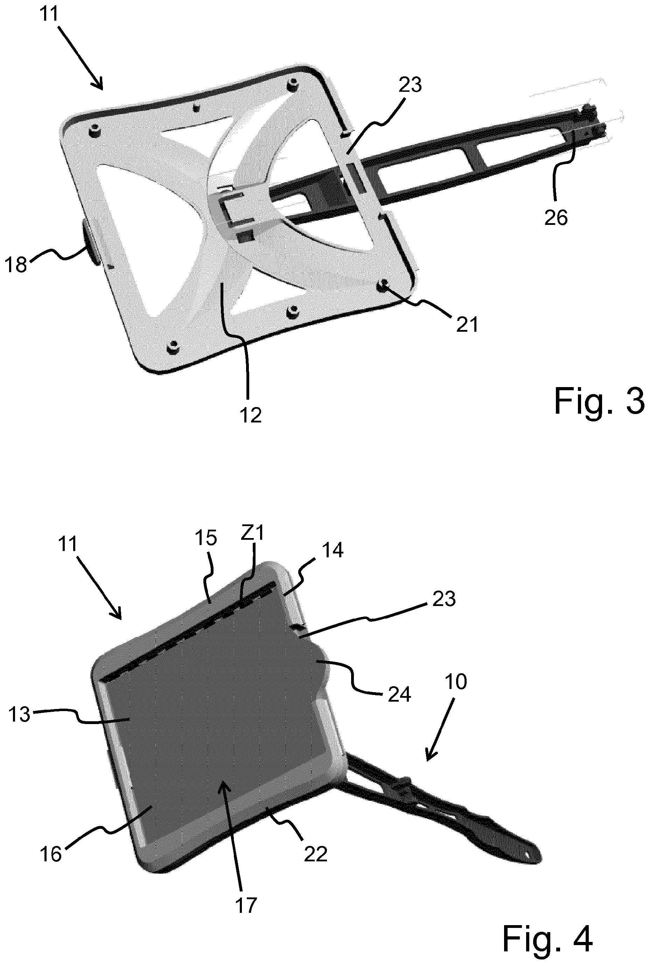

La figure 3 illustre la présence d'ergots **21** au sein du support **12.** Ces ergots sont destinés à coopérer avec des alésages disposés sur un bloc de feuilles collantes **13.** A cet effet, les ergots **21** présentent un corps cylindrique, s'étendant perpendiculairement à la surface du support **12.** En variante, les ergots **21** peuvent présenter toute autre forme connue, par exemple une forme en pointe. En variante, le bloc de feuilles collantes **13** peut être clipsé et/ou fixé et/ou glissé dans la tête **11.**

Des moyens de détrompage sont également réalisés par la position et/ou la forme des ergots **21.** Par exemple, la figure 3 illustre un ergot **21**, dont le diamètre est très largement inférieur aux autres. Ainsi, le bloc de feuilles collantes **13** présente un alésage dont le diamètre est adapté à cet ergot **21**, qui impose à l'utilisateur de disposer correctement le bloc de feuilles collantes **13.** En variante, au moins deux ergots **21** sont disposés de manière dissymétrique par rapport à un axe passant par le centre du support **12.**

Lorsque le bloc de feuilles collantes **13** est monté sur le support **12** et emmanché dans les ergots **21,** un cadre **14** vient recouvrir au moins un bord du bloc de feuilles collantes **13.** Le cadre **14** présente une forme parallélépipédique ajourée dans sa partie centrale. Le cadre **14** est relié avec le support **12** au moyen de deux languettes dont l'épaisseur permet un déplacement en rotation du cadre **14** par rapport au support **12,** faisant ainsi fonction de charnière d'articulation. Pour fixer le cadre **14** sur le support **12,** le cadre **14** comporte un fermoir **18** muni d'une languette destinée à coopérer avec une gorge du support **12.**

Le cadre **14** présente des montants **22,** de sorte que l'évidement central du cadre **12** forme une cavité **16** disposée au-dessus du bloc de feuilles collantes **13.** La cavité **16** présente une formé parallélépipédique. La hauteur des montants **22** est prédéterminée de sorte que la profondeur de la cavité **16** soit adaptée au volume d'un insecte. Ainsi, lorsqu'un insecte est piégé dans la cavité **16,** il demeure collé contre une surface collante **17** du bloc de feuilles collantes **13,** sans pour autant être écrasé.

Les montants **22** présentent un évidement **23** destiné à permettre à une languette **24** des feuilles du bloc de feuilles collantes **13** de s'étendre en dehors de la cavité **16.** De préférence, les languettes **24** ne présentent pas de colle, de sorte que la préhension de la languette **24** par l'utilisateur s'en trouve facilitée.

Le matériau constitutif de la tête **11** est préférentiellement du plastique, et par exemple du polypropylène injecté, de sorte que le dispositif demeure léger et facilement manipulable.

L'épaisseur du cadre **14** doit être la plus faible possible de sorte que la surface de la cavité **16** soit la plus grande possible. Cependant, au moins un rebord **15** du cadre **14** est surdimensionné de sorte à recouvrir au moins une partie du bloc de feuilles collantes **13.**

Le rebord **15** permet de maintenir le bloc de feuilles collantes **13** dans le cadre **14** et notamment lorsqu'une feuille du bloc de feuilles collantes **13** est retirée du bloc de feuilles collantes **13.**

A cet effet, et selon un mode de réalisation de l'invention, chaque feuille du bloc de feuilles collantes **13** comporte une zone de rupture prédéterminée **Z1** qui s'étend le long du rebord **15.**

Lorsqu'une feuille est retirée du bloc de feuilles collantes **13** par une préhension de la languette **24,** une partie de la feuille disposée sous le rebord **15** demeure dans la tête **11,** alors qu'une autre partie de la feuille est retirée. Cette zone de rupture prédéterminée **Z1** permet ainsi d'effeuiller individuellement les feuilles collantes les unes des autres sans entrainer le retrait de multiples feuilles.

De préférence, le cadre **14** comporte deux rebords recouvrant les ergots **21** lorsque le cadre **14** est fixé sur le support **12.**

## Revendications

1. Dispositif de capture d'insectes comportant :
- un manche (10), et
- une tête (11) montée à une extrémité du manche (10), comportant :
▪ un support (12),
▪ un cadre (14) coopérant avec le support (12), présentant au moins un rebord (15) et définissant avec le support (12) une cavité (16) recevant un bloc de feuilles collantes (13) aptes à retenir un insecte, ladite cavité débouchant sur une face collante (17) du bloc de feuilles collantes (13) de sorte que les insectes présents dans la cavité (16) sont collés sur la feuille collante ;
- le rebord (15) recouvre une partie du bloc de feuilles collantes (13) ;
**caractérisé en ce que** :
- chaque feuille du bloc de feuilles collantes (13) comporte une zone rupture prédéterminée (Z1) qui s'étend le long du rebord (15), de sorte que les feuilles collantes peuvent être effeuillées individuellement les unes des autres sans entraîner le retrait de multiples feuilles,

2. Dispositif de capture d'insectes selon la revendication 1, dans lequel le cadre (14) est monté en rotation sur le support (12), le cadre (14) comportant un fermoir (18) muni d'une languette destinée à coopérer avec une gorge du support (12) de sorte à maintenir le cadre (14) sur le support (12).

3. Dispositif de capture d'insectes selon la revendication 1 ou 2, dans lequel le support (12) comporte au moins un ergot (21), et avantageusement au moins quatre ergots, s'étendant perpendiculairement par rapport à la surface du support (12) et positionné de sorte à être recouvert par le rebord (15) lorsque le cadre (14) est fixé sur le support (12).

4. Dispositif de capture d'insectes selon la revendication 3, dans lequel le support (12) comporte des moyens de détrompage du bloc de feuilles collantes (13) réalisés par la position et/ou la forme des ergots (21).

5. Dispositif de capture d'insectes selon l'une des revendications 1 à 4, dans lequel le support (12) est de forme concave, convexe, circulaire et/ou parallélépipédique.

6. Dispositif de capture d'insectes selon l'une des revendications 1 à 5, dans lequel un montant (22) du support (12) et/ou du cadre (14) présente un évidement (23) destiné à permettre à une languette (24) émergeant des feuilles du bloc de feuilles collantes de s'étendre en dehors de la cavité (16).

7. Dispositif de capture d'insectes selon l'une des revendications 1 à 6, dans lequel la tête (11) est montée en rotation à une extrémité du manche (10), la tête (11) étant mobile entre deux positions :
∘ une position verticale dans laquelle un ergot (31) de la tête (11) assure un blocage de la tête (11) sur le manche (10), et
∘ une position horizontale dans laquelle un ergot (30) du manche (10) assure un blocage de la tête (11) sur le manche (10).

8. Dispositif de capture d'insectes selon l'une des revendications 1 à 7, dans lequel la tête (11) comporte une face (25) opposée à la cavité (16), présentant au moins une surface rigide apte à percuter un insecte volant de sorte à le détruire.

9. Dispositif de capture d'insectes selon l'une des revendications 1 à 8, dans lequel le manche (10) comporte une partie supérieure (26) et une partie inférieure (27) reliées par une liaison pivot (28), des moyens de blocage permettent de maintenir les parties supérieures (26) et inférieures (27) alignées.

## Patentansprüche

1. Insektenfangvorrichtung, umfassend
- einen Griff (10) und
- einen Kopf (11) montiert auf ein Endstück des Griffs (10), umfassend:
• einen Halter (12),
• einen Rahmen (14), der mit dem Halter (12) kooperiert und mindestens einen Rand (15) aufweist, und der mit dem Halter (12) eine Vertiefung (16) bildet, zur Aufnahme eines Klebeblätter-Blocks (13), der ein Insekt zurückhalten kann, diese Vertiefung mündet auf der Klebeseite (17) des Klebeblätter-Blocks (13), so dass die Insekten in der Vertiefung (16) auf dem Klebeblättchen festkleben:
- der Rand (15) deckt einen Teil des Klebeblätter-Blocks (13) ab;
**dadurch gekennzeichnet, dass**
- jedes Blättchen des Klebeblätter-Blocks (13) eine vorher festgelegten Abreisszone (Z1) umfasst, die entlang des Randes (15) verläuft, so dass die aneinander klebenden Klebeblättchen einzeln abgenommen werden können, ohne dass mehrere Blättchen gleichzeitig weggenommen werden.

2. Insektenfangvorrichtung nach Anspruch 1, bei der der Rahmen (14) drehbar auf dem Halter (12) befestigt ist, der Rahmen (14) umfasst einen Verschluss, versehen mit einer Lasche (18), die mit einer Kehle des Halter (12), zusammenarbeitet, so dass der Rahmen (14) auf dem Halter (12), gehalten wird.

3. Insektenfangvorrichtung nach Anspruch 1 oder 2, bei der der Halter (12), mindestens eine Nase (21), und vorteilhafterweise mindestens vier Nasen enthält, die senkrecht zur Halter (12)- fläche stehen und so angeordnet sind, dass sie vom Rand (15) abgedeckt werden, wenn der Rahmen (14) auf dem Halter (12), befestigt ist.

4. Insektenfangvorrichtung nach Anspruch 3 bei der der Halter (12), Markierungsvorrichtungen für den Klebeblätter-Block (13) enthält, die durch die Position und/ oder die Form der Nasen (21) ausgeführt sind.

5. Insektenfangvorrichtung nach einem der Ansprüche 1 bis 4, bei der der Halter (12) eine konkave, konvexe, kreisförmige und/ oder quaderförmige Fläche hat.

6. Insektenfangvorrichtung nach einem der Ansprüche 1 bis 5, bei der eine Strebe (22) des Halters (12) und/ oder des Rahmens (14) eine Aussparung (23) aufweist mit der eine Lasche (24) der Blättchen des Klebeblätter-Blocks über die Vertiefung (16) hinausreichen kann.

7. Insektenfangvorrichtung nach einem der Ansprüche 1 bis 6, bei der der Kopf (11) drehbar auf einem Endstück des Griffs (10) montiert ist, der Kopf (11) ist zwischen zwei Positionen beweglich:
- eine vertikale Position, in der eine Nase (31) des Kopfes (11) dafür sorgt, dass der Kopf (11) am Griff (10) blockiert ist und
- eine horizontale Position, in der eine Nase (30) des Griffs (10) dafür sorgt, dass der Kopf (11) am Griff (10) blockiert ist.

8. Insektenfangvorrichtung, nach einem der Ansprüche 1 bis 7, bei der der Kopf (11) eine Seite (25) gegenüber der Vertiefung (16) umfasst, die mindestens eine starre Fläche aufweist, die in der Lage ist, ein fliegendes Insekt zu erschlagen, so dass es getötet wird.

9. Insektenfangvorrichtung nach einem der Ansprüche 1 bis 8, bei der der Halter (10) einen oberen Teil (26) und einen unteren Teil (27) umfasst, verbunden durch eine Klappverbindung (28), Blockiermittel erlauben es, den oberen (26) und unteren (27) Teil ausgerichtet zu halten.

## Claims

1. Insect-capturing device incorporating:
- a handle (10); and
- a head (11) fitted at one end of the handle (10), incorporating:
• a mounting (12);
• a frame (14) interoperating with the mounting (12) with at least one rim (15) and forming, with the mounting (12), a cavity (16) accommodating a block of sticky sheets (13) able to capture an insect, with the said cavity opening onto one sticky face (17) of the block of sticky sheets (13) such that the insects present in the cavity (16) are stuck to the sticky sheet;
- the rim (15) covers a part of the block of sticky sheets (13);
**characterized by** the fact that
each sheet of the block of sticky sheets (13) incorporates a previously-determined breakage area (Z1) that extends along the rim (15), such that the sticky sheets can be peeled off individually from each other, without causing the removal of multiple sheets.

2. Insect-capturing device in accordance with claim 1, in which the frame (14) is mounted in a manner such that it is able to rotate on the mounting (12), with the frame (14) incorporating a clasp (18) having a tongue designed to interoperate with a groove in the mounting (12).

3. Insect-capturing device in accordance with claims 1 or 2, in which the mounting (12) incorporates at least one stud (21) and, advantageously, at least four studs extending perpendicularly in relation to the surface of the mounting (12) and positioned such as to be covered by the rim (15) when the frame (14) is secured to the mounting (12).

4. Insect-capturing device in accordance with claim 3, in which the mounting (12) incorporates a fool-proofing system for the block of sticky sheets (13), constituted by the position and/or shape of the studs (21).

5. Insect-capturing device in accordance with one of claims 1 to 4, in which the mounting (12) is of concave, convex, circular and/or oblong shape.

6. Insect-capturing device in accordance with one of claims 1 to 5, in which an upright (22) on the mounting (12) and/or the frame (14) incorporates a hollow (23) designed to enable a tongue (24) protruding from the sheets of the block of sticky sheets to protrude outside the cavity (16).

7. Insect-capturing device in accordance with one of claims 1 to 6, in which the head (11) is mounted in such a manner as to be able to rotate, at one end of the handle (10), with the head being movable between two positions:
• one vertical position in which a stud (31) on the head (11) immobilizes the head (11) on the handle (10); and
• one horizontal position in which a stud (30) on the handle (10) immobilizes the head on the handle (10).

8. Insect-capturing device in accordance with one of claims 1 to 7, in which the head (11) incorporates a face (25) opposite the cavity (16) with at least one rigid surface able to strike a flying insect in a manner that kills it.

9. Insect-capturing device in accordance with one of claims 1 to 8, in which the handle (10) incorporates an upper part (26) and a lower part (27) joined by a pivot connection (28), with an immobilizing system able to maintain the upper (26) and lower (27) parts aligned.
